# EUROPEAN PATENT APPLICATION

(11) **EP 2 075 081 A1**
(43) Date of publication of application: **01.07.2009**
(21) Application number: 08022354.8
(22) Date of filing: 23.12.2008
(51) Int. Cl.: B23K 11/11, B23K 11/31

(54) **Resistance spot welding gun**

(30) Priority: 27.12.2007 IT TO20070950
(71) Applicant: KGR S.p.A., 10032 Brandizzo (Torino) (IT)
(72) Inventor: Simioli, Marco, 10040 Almese (TO) (IT)
(74) Representative: Cian, Paolo

(57) **Abstract**

A resistence spot welding gun, intended to be hung on a movable or stationary support member, comprises a frame (12) provided with a support portion (16) for hanging the gun (10) on the support member, and a pair of lateral sides (22) which bear an axis of articulation of a welding equipment (14) of the gun (10). The welding equipment (14) includes a pair of clamps (70, 40), to each of which a respective electrode holder arm (74, 44) provided with a welding electrode (76, 46) is fixed, which clamps (70, 40) are articulated to the frame (12) about said axis of articulation through a pair of respective side uprights (68, 38), a main actuator (58) adapted to control the rotation of the upper electrode holder arm (74), and feeding means (30), connected to the welding electrodes (46, 76), for feeding an electrical current. The uprights (68, 38) and the sides (22) of the frame (12) are removably connected in order to allow their replacement so that the size of the clamp (10) may be changed.

## Description

The present invention refers to a resistance spot welding gun intended to be used in robotized welding applications, particularly for welding motor vehicle bodies. The welding gun may be used according to two typical working configurations, that is according to a first configuration in which it is hung at the end of an arm of a handling robot, in which case the electrodes of the gun are brought in succession at a plurality of welding zones of a stationary sheet workpiece as a result of the movement in the space of the robot arm, or according to another configuration in which the gun is mounted on a stationary support base, for example a column-shaped base, while the sheet workpiece to be welded, which is carried by the robot arm, is handled in the space so that the zones thereof in which the weldings have to be carried out are brought in succession at the welding electrodes of the gun.

More specifically, the invention relates to a gun of the type known defined in the preamble of appended claim 1.

Welding guns of the type mentioned above are manufactured by manufacturers according to several sizes, depending on the kind of application they are intended to. In particular, the market asks for a series of substantially standard sizes of such guns, so that manufacturers manufacture the models according to the sizes needed, by using specific parts for each size of a gun. This constitutes a problem which involves an increase of the whole manufacturing costs of a series of guns of different sizes, as well as of the relevant costs of maintenance and for spare parts.

The invention starts from the consideration that many elements of such guns could be manufatured in order to be common to the different sizes of guns needed by the market, and that it would be therefore favorable to conceive a gun having a modular structure so that manufacturing of guns of different sizes may be obtained only by replacing a limited number of parts which directly affect the final size of each gun.

According to a first aspect of the invention, this problem is solved by a gun having the features mentioned in appended claim 1.

By virtue of this idea of solution, the welding gun according to the invention has a modular structure which comprises a series of standard components, which are common to all sizes of the guns needed by the market, and a limited number of interchangeable members which, together with the standard components, allow that guns of several dimensions are obtained. This favorably allows the stocks on hand required for manufacturing the welding guns needed by the market to be reduced in a considerable manner, and therefore to reduce appreciably their overall costs.

Another problem of known welding guns is that they have wiring harnesses and flexible pipes which project out of the shape of the gun, and which may therefore hinder the movement of the robot arm either when the gun is hung on such an arm, or when the robot arm handles in the space a sheet workpiece to be welded, particularly in the event in which the gun, as usually happens, must operate in narrow spaces, and which may constitute also a danger for possible operators which are present in proximity of the working area of the gun.

This problem is solved by a second aspect of invention, by virtue of the fact that said wiring harnesses and flexible pipes are connected to a fitting unit intended to be arranged in a position laying between a pair of parallel planes defined by the sides of the frame, so that said wiring harnesses and flexible pipes are substantially arranged within the side dimensions of the frame, in such a manner that they do not hinder for any work carried out by the gun.

In this manner, the dimensions of the welding gun of the invention are smaller than those of the previously known guns, which increases its versatility of use and its safety characteristics.

A further problem of known welding guns consists in the fact that they are intended to be driven by a predetermined actuator, which is defined during the design, that may be of the hydraulic, pneumatic or electrical type. In particular, once the structure of the gun as well as the respective actuator are defined, it is not possible anymore to act in a simple manner in order to replace such an actuator with a different one, for example in view of a new requirement of the user, unless the gun structure is modified substantially.

This problem is solved by a third aspect of the invention, by virtue of the fact that the body of the main linear actuator of the gun comprises a head portion which slidably supports a control rod, a removable interface unit being operatively interposed between said head portion and a driving portion of the main linear actuator, said interface unit having connection means adapted to be connected with a driving portion of the hydraulic, pneumatic or electrical type, respectively, in order to allow the driving portion of the main linear actuator to be replaced with another driving portion.

In this manner, the gun according to the invention is already prepared in advance to be able to be controlled indifferently by an actuator of the hydraulic, pneumatic or electrical type, only requiring the replacement of the driving portion of the actuator and the relevant interface unit, with one of a preselected type, without any need to act on other members of the gun.

Therefore, a gun of this kind allow a manufacturer to offer a wide range of guns which can be driven by different actuators also if they have a same general structure, and also to replace the actuator type during the operative life of the gun.

The invention will turn out to be more apparent from the following detailed description, made with reference to the appended drawings, given as a non-limitative example, which show a preferred embodiment of a gun according to the invention, and in which:

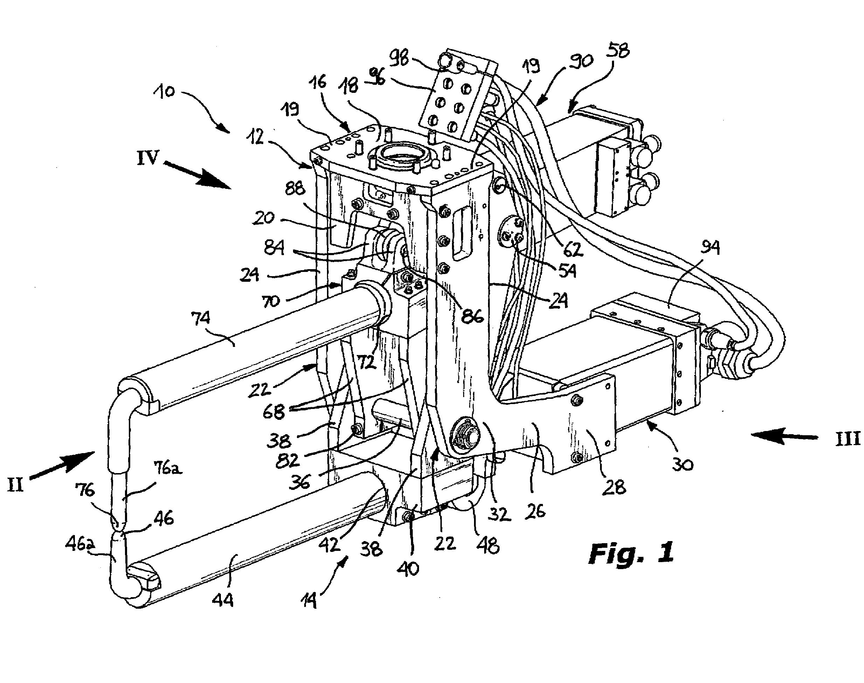

figure 1 is a perspective front view of a welding gun according to the invention,
figure 2 is a front elevational view of the gun of figure 1, from arrow II,

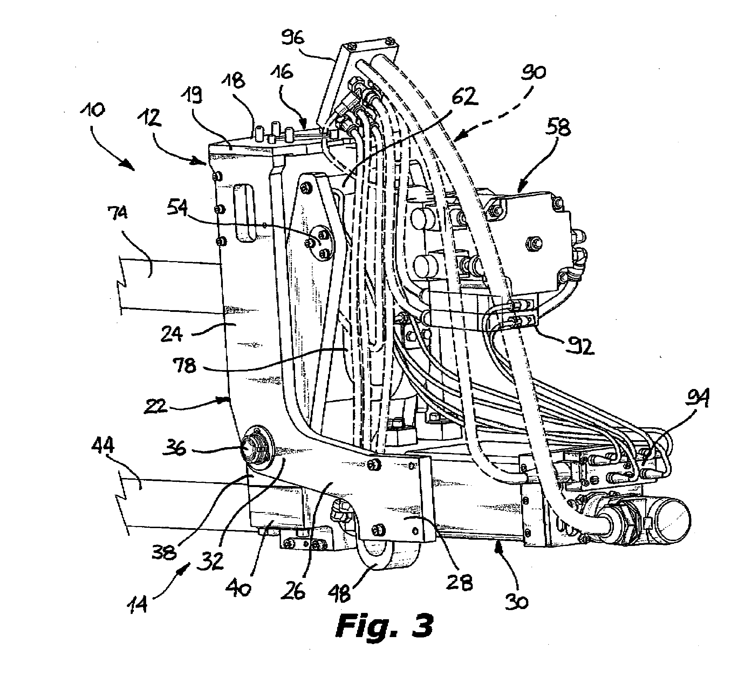

figure 3 is a schematic perspective rear view of the gun of figure 1, from arrow III,
figure 4 is a side elevational view of the gun of figure 1, from arrow IV, and
figure 5 is a schematic perspective view showing some components of the gun according to the invention, the replacement of which allows the dimensions of the gun to be changed.

With reference to the drawings, a welding gun indicated 10 as a whole comprises a frame 12, which is preferably made by light alloy members, and a welding equipment 14 associated with the frame 12.

The frame 12 may be hung at the end of a robot arm (not shown), such as the arm of an anthropomorhic robot of a type known per se, in such a manner that the gun 10, as a result of the movement of the robot arm, may be brought in succession at a series of welding zones of a stationary sheet workpiece, or the frame 12 may be mounted on a stationary support base (not shown), for example a column-shaped base, in which case a robot arm or another robotized apparatus will be used for supporting a sheet workpiece to be welded and for handling it in the space so that the zones therof in which weldings have to be carried out may be brought in succession in a position close to the gun 10, in order to allow respective spot weldings to be carried out.

The frame 12 includes essentially a support portion 16 and a pair of sides 22 which extends cantilevered from the portion 16.

The support portion 16 is formed by a transverse plate 18 provided with coupling formations for coupling it to the end of said robot arm or to said stationary base, and by a front plate 20 fixed transversely below the transverse plate 18, for example by fastening screws (not shown).

Each side 22 is a substantially L-shaped plate comprising a first vertical branch 24 which has an upper end connected both at a respective side flange 19 of the transverse plate 18, and at a side end surface of the front plate 20, by connection means known per se, such as fixed joint formations and/or fastening screws.

A second branch 26 of each side 22 has a free end 28 to which feeding means, typically in the form of a transformer 30, are connected for example by screws, in order to feed an electric current to the welding equipment 14, so that the transformer 30 is hung directly on the support portion 16 and therefore on the robot arm or the stationary base.

An elbow portion 32 is interposed between the branches 24 and 26 of each side 22, which elbow portion has a through hole 34 for engaging a pin 36 which defines the axis of articulation of the welding equipment 14.

Conveniently, both the sides 22 are flat and equal to each other, so that a same piece may be used indifferently in order to manufacture the right or the left side of the frame 12.

The welding equipment 14 comprises a pair lower side uprights 38 arranged between the sides 22, both of which are connected in a removable manner to a half-pliers or clamp 40, by means of fastening screws. Preferably, both the lower upright 38 and the lower clamp 40 are made by light alloy.

The clamp 40 has a cylindrical seat 42 for inserting an end of a lower electrode holder arm 44 having a tubular shape, provided at the opposite end with a respective support member 46a which supports a welding electrode 46. Usually, an insulating gasket and a metallic fitting bush (both not shown) are interposed concentrically between the cylindrical seat 42 and the electrode holder arm 44, the diameter of the metallic bush being adjustable in order to allow electrode holder arms 44 of different diameter to be inserted in the cylindrical seat 42.

The lower electrode holder arm 44 is connected to the secondary of the transformer 30 through a substantially U-shaped first flexible connection conductor 48.

The lower uprights 38, which conveniently consist of a pair of flat plates equal to each other so that a same piece may be used to manufacture indifferently the left or right lower upright, have a through hole 50 at an intermediate zone thereof close to the clamp 40, to be rotatably engaged by the pin 36 in order to allow the lower clamp 40 to swing about the axis of articulation of the welding equipment 14. Another hole 52 for articulably connecting a pin 54, is formed at a portion of the uprights 38 close to their ends opposite to the clamp 40, a head 56 of the body of a main linear actuator 58 being associated with the pin 54.

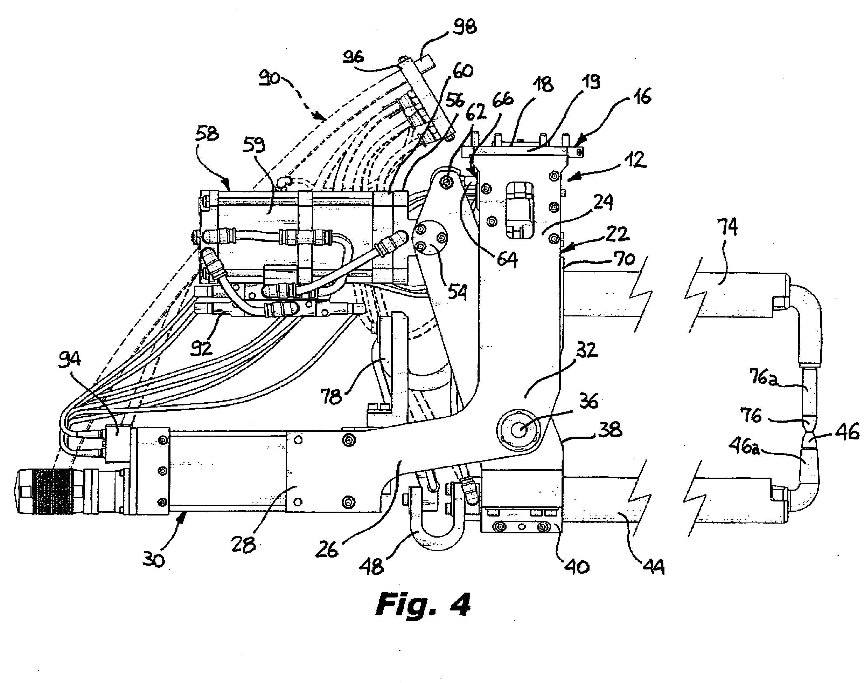

Preferably, the body of the main linear actuator 58 comprises a driving portion 59 which may be of the hydraulic, pneumatic or electrical type, depending on a requirement of the user, and an interface unit 60 (figure 4) operatively interposed between the driving portion 59 and the head portion 56, which is removably mounted with respect to the head portion 56. The interface unit 60, which is made so as to fit with the relevant hydraulic, pneumatic or electrical driving portion, respectively, comprises connection means for connecting the head portion 56, which are independent from the selected type of driving portion 59, and which allow therefore the driving portion 59 to be replaced in a simple manner with another of a different type, depending on the requirement of the user, only as a result of the disassembly of the unit formed by the driving portion 59 and the relevant interface unit 60, and its replacement with a different unit including another type of driving portion 59 and the relevant interface unit 60.

A further through hole 61 is formed at the end of the lower uprights 38 opposite to the clamp 40, to be engaged by a transverse pin 62 for the articulation of an end of a rod of a secondary linear actuator 66 of compensation, which is swingably connected below the transverse plate 18. The secondary actuator 66 is intended to allow the whole welding equipment 14 to swing about the respective axis of articulation, in order to adjust its attitude with respect to a welding plane of the welding gun 10.

The welding equipment 14, between the lower uprights 38, comprises also a pair of side upper uprights 68, parallel to the uprights 30, each of which has an upper end removably connected to an upper half-pliers or clamp 70, by fastening screws. Preferably, both the upper uprights 68 and the upper clamp 70 are made by light alloy.

A first end of a tubular shaped upper electrode holder arm 74, is inserted in a cylindrical seat 72 of the upper clamp 70. Analogously with what has been described above with respect to the electrode holder arm 44, usually an insulating gasket and a metallic fitting bush (both not shown) are interposed concentrically between the cylindrical seat 72 of the upper clamp 70 and the upper electrode holder arm 74, the diameter of the metallic bush being adjustable in order to allow electrode holder arms 74 of different diameter to be inserted in the cylindrical seat 72.

The upper electrode holder arm 74 is provided, at the end opposite to the clamp 70, with a support member 76a for supporting a respective welding electrode 76, and is connected, at the side close to the clamp 70, to the secondary of the transformer 30 through a second U-shaped flexible connection conductor 78.

Both the electrode holder arms 44 and 74 are made in a usual manner by copper or relevant alloys, are insulated with respect to the clamps 40 and 70 by respective insulating gaskets, and are cooled by inner water circulation.

Conveniently, the two upper uprights 68 are made by a pair of identical flat plates, so that a same piece may be used to manufacture indifferently the left or right upper upright. Each upper upright 68 has a through hole 80 at a distal zone thereof with respect to the clamp 70, for the engagement of the pin 36 and for fastening it by respective screws 82 which engage relevant holes 83 parallel to the plane of the upper uprights 68.

The upper clamp 70 comprises a pair of upwardly projecting integral lugs 84, in order to allow connection of a transverse pin 86 of articulation of an end of a slidable control rod 88 of the main linear actuator 58. In this manner, sliding of the the rod 88 causes the unit formed by the upper clamp 70 and the upper uprights 68 to swing with respect to the axis of articulation of the welding equipment 14, and therefore an oscillation of the upper electrode holder arm 74.

In each welding cycle, the main actuator 58, through its rod 88, controls the angular oscillations of the upper electrode holder arm 74 between the welding position shown in the figures, and an opening position (not shown) in which the two electrodes 46 and 76 are spaced to each other. When a change of the attitude of the the welding plane of the gun 10 is required, the secondary actuator 66 acts in order to swing as a single piece the whole welding equipment 14 consisting of the clamps 40 and 70, the respective uprights 38 and 68, the electrode holder arms 44 and 74, and the electrodes 46 and 76 thereof, about the axis of the pin of articulation 36, for the purpose of balancing. Moreover, the secondary actuator 66 allows the whole welding equipment 14 to be kept in a predetermined and repeatable configuration in the space, when it is in an inactive condition, for example during a moving step, with the two electrodes 46 and 76 spaced to each other.

According to the first aspect of the invention, the same general structure of the gun 10 described above may be used in order to manufacture guns having different sizes, only by replacing a limited number of pieces.

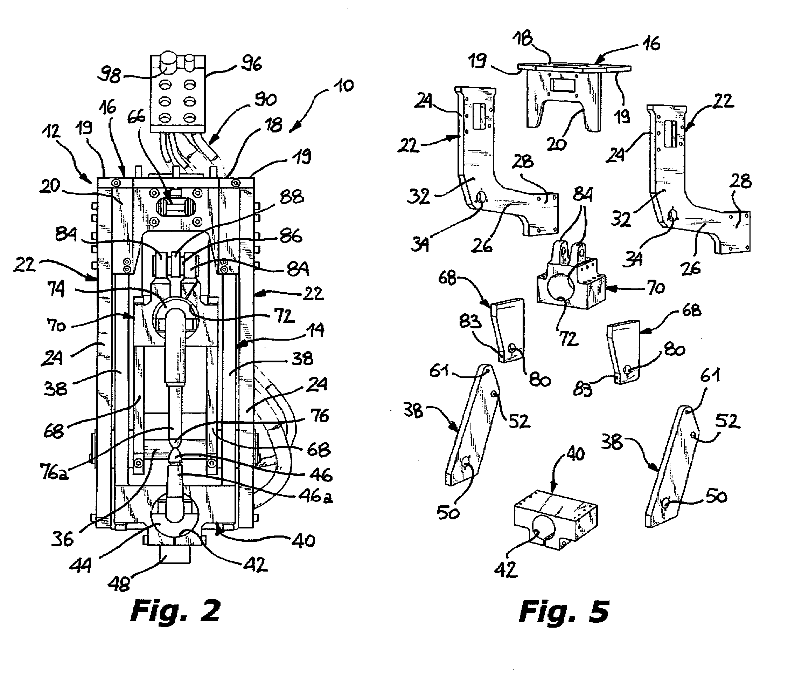

With reference to figure 5, at least three standard types of gun 10 may be manufactured, in particular according to a "small" type in which the distance between centers of the electrode holder arms 44 and 74 is about 200 mm, or according to a "medium" type in which the distance between centers of the electrode holder arms 44 and 74 is about 300 mm, or according to a "large" type in which the distance between centers of the electrode holder arms 44 and 74 is about 400 mm, by replacing the sides 22 with other having different dimensions, in particular having branches 24 with a different extension, and the upper and lower uprights 68 and 38 with other having an extension corresponding to the size of the gun 10, the other members of the gun 10, such as the support portion 16 and the upper and lower clamps 70 and 40, being kept unchanged.

Since the two sides 22 and both the uprights 68 and 38 are equal to each other, it is possible to change only the size of these three pieces in order to obtain guns 10 of the three aforesaid standard sizes.

In the more general case, also the dimensions of the electrode holder arms 44 and 74 will correspond to those of the respective gun, and in particular the length of their terminal portions which support the electrodes 46 and 74 will be fitted to each size of the gun 10. Usually, also the axial extension of the two electrode holder arms 44 and 74 will be different for the guns 10 of the "small", "medium" and "large" type, being about 400 mm for a gun 10 of the "small" type, about 600 mm for a gun 10 of the "medium" type, and about 800 mm for a gun 10 of the "large" type, and will have suitable dimensions in the case of possible other types of guns.

A series of wiring harnesses and flexible pipes indicated 90 in general, extends between the transformer 30, the electrode holder arms 44 and 74, and the main and secondary actuators 58 and 66, mainly at the rear zone of the gun 10 starting from the pin 54, in order to allow a possible control fluid of such actuators to pass, as well as an electrical current to be fed to the transformer 30 and a driving electrical current to pass for driving solenoid valve units 92 and 94 associated with the main actuator 58 and with the transformer 30. These wiring harnesses and pipes 90 are connected to a plate shaped fitting unit 96, provided with seats adapted to allow an intermediate portion therof to be fastened.

The fitting unit 96 is intended to be arranged in a position laying between the two parallel planes defined by the sides 22 of the frame 12, in such a manner that at least a prevailing portion of such wiring harnesses and flexible pipes 90 is confined within the side dimensions of the frame 12, so that the whole shape of the gun 10 turns out to be compact and, in particular, without any member projecting sideways from the gun 10 which might hinder its movements if it is moved by a robot arm, or which might interfere with the movements of a robotized handling equipment of a piece to be welded if the gun 10 is mounted stationary.

Conveniently, the fitting unit 96 is provided with suspension and fastening members, for example in the shape of a projecting pin 98, which are adapted to be inserted into a corresponding seat formed at the end of the robot arm or at the end of the support base, which can be selectively connected to the support portion 16 of the frame 12.

## Claims

1. Resistance spot welding gun, intended to be hung on a movable or stationary support member, comprising:
a frame (12) including a support portion (16) for hanging the gun (10) on said support member, and a pair of sides (22) connected sideways to the support portion (16), which sides (22) bear an axis of articulation of a welding equipment (14) of the gun (10),
the welding equipment (14) including:
a pair of clamps (70, 40), respectively upper and lower, to which a relevant electrode holder arm (74, 44) provided with a welding electrode (76, 46) is fastened, each clamp (70, 40) being articulated to the frame (12) about said axis of articulation through a pair of side uprights (68, 38), respectively upper and lower,
a main linear actuator (58), the body of which is supported by said lower uprights (38), which is adapted to control the swinging movement of the upper clamp (70) and the resulting rotation of the upper electrode holder arm (74) about said axis of articulation, and
electrical welding current feeding means (30) connected to the welding electrodes (46, 76) through the respective electrode holder arms (44, 74) and supported by the sides (22) of the frame (12),
**characterized in that** the uprights (68, 38) of the upper clamp (70) and of the lower clamp (40), as well as the sides (22) of the frame (12) are removably connected to the upper clamp (70), to the lower clamp (40) and to the support portion (16) of the frame (12), respectively, in order to allow their replacement in order to change the dimensions of the gun (10).

2. Welding gun according to claim 1, **characterized in that** the support portion (16) of the frame (12) comprises a transverse plate (18) and a front plate (20) fixed to each other, and **in that** each side (22) of the frame (12) is intended to be connected at a pair of opposite flanges (19) of the transverse plate (18), and at a pair of opposite end surfaces of the front plate (20).

3. Welding gun according to claim 3, **characterized in that** said main linear actuator (58) comprises a slidable control rod (88) for controlling the oscillation of said upper electrode holder arm (74), an end of said control rod (88) being articulated at a pin (86) crossing a portion (84) of the upper clamp (70).

4. Welding gun according to claim 2 or 3,
**characterized in that** each side (22) of the frame (12) is a substantially L-shaped plate comprising a first branch (24) one end of which is intended to be connected to the support portion of the frame (16), and a second branch (26) having a free end (28) for fastening said electrical current feeding means (30), an elbow portion (32) having a hole (34) for engaging a pin (36) which defines said axis of articulation, being defined between the first and the second branch (24, 26).

5. Welding gun according to claim 3, **characterized in that** said electrical current feeding means comprise a transformer (30) including a secondary electrically connected to the lower and to the upper electrode holder arms (44, 74) through respective flexible connection conductors (48, 78).

6. Welding gun according to any one of claims 1 to 5, **characterized in that** both the sides (22) of the frame are flat and are equal to each other.

7. Welding gun according to any one of claims 1 to 6, **characterized in that** the upper uprights (68) of the welding equipment (14) consist of a pair of flat plates equal to each other.

8. Welding gun according to any one of claims 1 to 7, **characterized in that** the lower uprights (38) of the welding equipment (14) consist of a pair of flat plates equal to each other.

9. Welding gun according to any one of claims 1 to 8, **characterized in that** said lower uprights (38) are articulated about said axis of articulation at an intermediate zone thereof, and **in that** a portion thereof, which is close to the end opposite to the lower clamp (40), is articulated to the body of the main linear actuator (58).

10. Welding gun according to claim 9, **characterized in that** a transverse pin (62) is associated with an end of the lower uprights (38) opposite to the lower clamp (40), an end of a rod (64) of a secondary linear actuator (66), which is intended to swing the welding equipment (14) about to the aforesaid axis of articulation, being articulated to said transverse pin.

11. Welding gun according to any one of claims 1 to 10, **characterized in that** it comprises wiring harnesses and flexible pipes (90) to allow passage of an electrical current to be fed to components of the gun (10) and/or of a fluid for controlling said actuators (58, 66), which wiring harnesses and flexible pipes (90) converge in a fitting unit (96) intended to be arranged in a position laying between a pair of parallel planes defined by the sides (22) of the frame (12), so that said wiring harnesses and flexible pipes (90) are substantially arranged within the side dimensions of the frame (12), in such a manner that they do not hinder for any work carried out by the gun (10).

12. Welding gun according to claim 11, **characterized in that** said fitting unit (96) is in the form of a plate including fastening formations for fastening said wiring harnesses and flexible pipes (90).

13. Welding gun according to claim 11 or 12, **characterized in that** said fitting unit (96) comprises suspension means (98) on said support member.

14. Welding gun according to any one of claims 1 to 13, **characterized in that** the body of said main linear actuator (58) comprises a head portion (56) which slidably supports said control rod (88), and **in that** a removable interface unit (60) is operatively interposed between said head portion (56) and a driving portion (59) of the main linear actuator (58), said interface unit having connection means adapted to be connected with a driving portion (59) of the hydraulic, pneumatic or electrical type, respectively, in order to allow the drive portion (59) of the main linear actuator (58) to be replaced by another driving portion (59).
